# EUROPEAN PATENT APPLICATION

(11) **EP 1 413 544 A1**
(43) Date of publication of application: **28.04.2004**
(21) Application number: 02746051.8
(22) Date of filing: 15.07.2002
(51) Int. Cl.: B82B 1/00, B82B 3/00, C01B 31/02, B01J 32/00, B01J 21/18

(54) **CARBON NANO−HORN AND METHOD FOR PREPARATION THEREOF**

(30) Priority: 13.07.2001 JP 2001214335
(71) Applicant: JAPAN SCIENCE AND TECHNOLOGY CORPORATION, Kawaguchi-shi, Saitama 332-0012 (JP); NEC Corporation, Minato-ku, Tokyo 108-8001 (JP); Institute of Research and Innovation, Tokyo 113-0034 (JP)
(72) Inventor: YUDASAKA, Masako, Tsukuba-shi, Ibaraki 300-2635 (JP); IIJIMA, Sumio, Nagoya-shi, Aichi 468-0011 (JP); KOKAI, Fumio, Tsukuba-shi, Ibaraki 305-0045 (JP); TAKAHASHI, Kunimitsu, Noda-shi, Chiba 278-0051 (JP); KASUYA, Daisuke, Kashiwa-shi, Chiba 277-0843 (JP)
(74) Representative: Patentanwälte Wenzel & Kalkoff
(86) International application number: PCT/JP2002/007160
(87) International publication number: WO 2003/006361

(57) **Abstract**

A particular material comprising an atom other than carbon is carried around or inside the carbon nanohom.

## Description

### Technical Field

The present invention relates to a carbon nanohom that is similar to a carbon nanotube and has a main structure in which a conical or frusto-conical region is placed between a large diameter portion and a small diameter portion. The present invention particularly relates to components of the carbon nanohorn and a process for producing the carbon nanohom.

### Background Art

In recent years, carbon materials having a nanometer-scale microstructure have been attracting much attention. The carbon materials such as carbon nanotubes, fullerenes, and nanocapsules have been expected to be used for electronic materials, catalysts, optical materials, and the like.

As is known, such carbon nanotubes and fullerenes have a structure that elements different from carbon are supported on carbon, which is a main component thereof. The carbon nanotubes and fullerenes with the above structure have various chemical properties and physical properties and can be therefore used in various applications.

However, carbon nanohoms with the above structure have not been found and processes for producing such carbon nanohoms have not been established. Therefore, the chemical properties and physical properties of the carbon nanohoms are limited. Thus, applications thereof are limited.

In view of the above situation, it is an object of the present invention to provide a structure of a carbon nanohom having various chemical properties and physical properties and a process for producing the carbon nanohom.

### Disclosure of Invention

The present invention provides a technique for producing carbon nanohorns including particles, placed in the vicinity of the carbon nanohorn or placed in an inner space thereof, containing an element, different from carbon, as a component. The present invention provides a technique for producing metal-supported or semiconductor-supported carbon nanohoms by injecting energy into carbon containing an element different from carbon to vaporize the element and carbon. The element includes metal, a semiconductor, and carbides thereof. Those materials may be used alone or in combination.

The present invention provides a carbon nanohom including particulate matter, placed in the vicinity of the carbon nanohom or placed in an inner space thereof, containing an atom other than carbon.

Such a carbon nanohom is allowed to have various chemical properties and physical properties depending on the particulate matter supported thereon, whereby applications of the carbon nanohorn are enhanced. The particulate matter used herein includes, for example, metal, alloy, a semiconductor, and carbides of those materials. Those materials may be used alone or in combination. In particular, when the particulate matter has a size of 1-50 nm, the carbon nanohom has satisfactory chemical properties and physical properties. Furthermore, when the particulate matter has a catalytic function, the carbon nanohorn can be used as a carrier having a microspace in which catalysts are effectively arranged.

The present invention provides a process for producing carbon nanohorns. The process includes a step of injecting energy into a mixture of carbon and particulate matter containing a substance, other than carbon, as a component to vaporize the particulate matter and carbon, thereby allowing the particulate matter to be supported on carbon nanohoms. The particulate matter may contain at least one selected from the group consisting of metal, alloy, a semiconductor, and carbides of those materials. When the particulate matter has a catalytic function, this process can be used for effectively dispersing and arranging catalysts in a microspace. The energy injection may be performed in an inert atmosphere. An exemplary method of the energy injection includes laser-beam irradiation.

As described above, since the element different from carbon is supported on the carbon nanohom, the carbon nanohorn has various chemical properties and physical properties.

### Brief Description of the Drawings

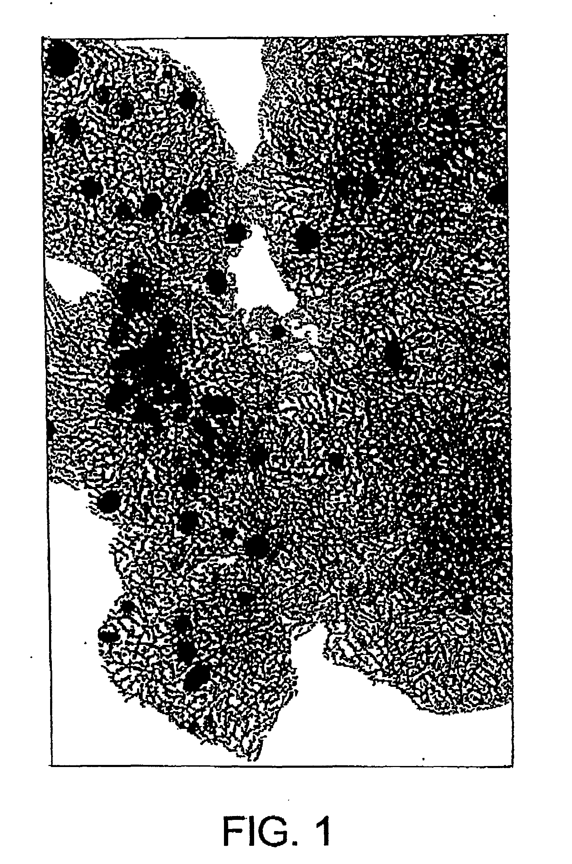

Fig. 1 is an illustration showing a carbon nanohom, observed with a transmission electron microscope, having platinum particles supported thereon.

### Best Mode for Carrying Out the Invention

A process for producing carbon nanohoms according to an embodiment of the present invention will now be described.
(1) A graphite target containing particulate matter to be supported on carbon nanohoms is prepared. The particulate matter used herein may contain a platinum group metal, transition metal, alkali metal, or alkaline earth metal. Alternatively, the particulate matter may contain an alloy of those metals or carbides of those metals. Furthermore, the particulate matter may contain a chalcogenide element or a semiconductor. Those elements or compounds may be used alone or in combination.
   An increase in content of the particulate matter in the graphite target raises the amount of the particulate matter supported on the carbon nanohom. In contrast, a decrease in content of the particulate matter in the graphite target lowers the amount of the particulate matter supported on the carbon nanohorn.
(2) The resulting graphite target is placed in an inert atmosphere. Examples of the inert gas include an argon gas, nitrogen gas, helium gas, and neon gas.
(3) Energy is injected into the graphite target. A typical method of the injection uses a laser beam.
   The carbon nanohorn can be produced if the energy injection is performed under vacuum or pressurized conditions. The particulate matter has a small size when the carbon nanohom is produced under vacuum conditions. A decrease in size of the particulate matter greatly varies chemical properties and physical properties of the carbon nanohom. In particular, when the particulate matter has a size of 1-50 nm, the carbon nanohom having satisfactory chemical properties and physical properties can be readily produced.
(4) The carbon nanohom is then formed.

The above process can be used without depending on the structure of the carbon nanohorn. That is, the process is applicable to any carbon nanohoms having a single-layer structure, a multilayer structure, or a pine cone structure.

Carbon nanohoms on which magnetic particulate matter is supported can be arbitrarily manipulated by applying a magnetic field to the carbon nanohoms. In common with the carbon nanohoms, carbon nanotubes and fullerenes other than the carbon nanohoms can be manipulated by the application of a magnetic field.

The present invention will now be described in detail with examples. [EXAMPLE 1] A CO₂ laser beam having a power of 4 kW, a pulse width of 500 ms, and a frequency of 10 Hz was applied to a graphite target containing one atomic percent of platinum at room temperature under a pressure of 1.013 x 10⁵ Pa (760 Torr) in an argon atmosphere, whereby carbon nanohoms on which platinum particles were supported were formed. That was observed with a transmission electron microscope, as shown in Fig. 1. The product was black powder and the platinum particles had a diameter of about 5 nm. The product yield was 75% by weight or more and the purity was about 90%.
[EXAMPLE 2] A CO₂ laser beam having a power of 4 kW, a pulse width of 500 ms, and a frequency of 10 Hz was applied to a graphite target containing one atomic percent of gadolinium at room temperature under a pressure of 1.013 x 10⁵ Pa (760 Torr) in an argon atmosphere, whereby single-layer carbon nanohorns on which gadolinium particles were supported were formed. The gadolinium particles had a diameter of about 5-10 nm. In this example, the product yield was 75% by weight or more and the purity was about 90%. The carbon nanohoms on which the gadolinium particles were supported could be manipulated, that is, the carbon nanohoms could be transferred to a desired location using a magnetic field.

### Industrial Applicability

According to the present invention, since a part of carbon nanohoms are supported on particulate matter containing an element different from carbon, the carbon nanohoms have various chemical properties and physical properties.

Furthermore, according to the present invention, when the supported particulate matter functions as a catalyst, catalysts can be effectively arranged in a microspace, whereby applications of the carbon nanohorns are enhanced.

## Claims

1. A carbon nanohom comprising particulate matter, placed in the vicinity of the carbon nanohom or placed in an inner space thereof, containing an atom other than carbon.

2. The carbon nanohom according to Claim 1, wherein the particulate matter contains at least one selected from the group consisting of metal, alloy, a semiconductor, and carbides of those materials.

3. The carbon nanohorn according to Claim 1, wherein the particulate matter has a size of 1 to 50 nm.

4. The carbon nanohom according to Claim 1, wherein the particulate matter has a catalytic function.

5. A process for producing carbon nanohorns, comprising a step of injecting energy into a mixture of carbon and particulate matter containing a substance, other than carbon, as a component to vaporize the particulate matter and carbon, thereby allowing the particulate matter to be supported on carbon nanohoms.

6. The process according to Claim 5, wherein the particulate matter contains at least one selected from the group consisting of metal, alloy, a semiconductor, and carbides of those materials.

7. The process according to Claim 5, wherein the particulate matter has a size of 1 to 50 nm.

8. The process according to Claim 5, wherein the particulate matter has a catalytic function.

9. The process according to Claim 5, wherein the energy injection is performed in an inert atmosphere.

10. The process according to Claim 5, wherein the energy injection is performed by the application of a laser beam.
